# EUROPÄISCHE PATENTSCHRIFT

(11) **EP 0 902 439 B1**
(45) Veröffentlichungstag und Bekanntmachung des Hinweises auf die Patenterteilung: **07.08.2002**
(21) Anmeldenummer: 98116429.6
(22) Anmeldetag: 31.08.1998
(51) Int. Cl.: G21C 17/00

(54) **Reaktordruckbehälter mit einer Leckageüberwachungseinrichtung**
Reactor pressure vessel comprising a leakage monitoring device
Cuve sous pression d'un réacteur avec un dispositif de surveillance de fuites

(30) Priorität: 11.09.1997 DE 19739997
(43) Veröffentlichungstag der Anmeldung: 17.03.1999
(73) Patentinhaber: Framatome ANP GmbH, 91050 Erlangen (DE)
(72) Erfinder: Röckelein, Harald, 96129 Strullendorf (DE)
(74) Vertreter: Mörtel & Höfner

(56) Entgegenhaltungen:
- DATABASE WPI Week 8848 Derwent Publications Ltd., London, GB; AN 88-343109 XP002101332 & JP 63 256893 A (TOSHIBA KK)
- PATENT ABSTRACTS OF JAPAN vol. 97, no. 9 & JP 09 113684 A (TOSHIBA ENG CO LTD ET AL.), 2. Mai 1997
- PATENT ABSTRACTS OF JAPAN vol. 15, no. 234, 14. Juni 1991 & JP 03 071095 A (TOSHIBA CORP)
- PATENT ABSTRACTS OF JAPAN vol. 96, no. 4, 30. April 1996 & JP 07 318683 A (MITSUBISHI HEAVY IND LTD)
- PATENT ABSTRACTS OF JAPAN vol. 8, no. 96, 4. Mai 1984 & JP 59 012193 A (TOKYO SHIBAURA DENKI KK)

## Beschreibung

Die Erfindung betrifft einen Reaktordruckbehälter mit einer Leckageüberwachungseinrichtung für eine Dichtung zwischen dem Deckel und dem Unterteil des Reaktordruckbehälters, wobei
- die Dichtung zwei Dichtungselemente aufweist,
- von den Dichtungselementen und von Dichtungsflächen des Deckels und des Unterteils bei aufliegendem Deckel ein Zwischenraum eingeschlossen ist, und
- eine Öffnung in einer der Dichtungsflächen mit einer Detektoreinheit zur Leckageüberwachung über eine Leckageüberwachungsleitung in Verbindung steht.

Der den Reaktorkern beinhaltende Druckbehälter eines Kernreaktors besteht im allgemeinen wenigstens aus einem im wesentlichen zylindrischen Unterteil und einem Deckel. An der Auflagefläche des Deckels auf dem Unterteil ist der Deckel gegenüber dem Unterteil durch eine Dichtung abgedichtet, die der hohen Temperatur und dem hohen Druck im Inneren des geschlossenen Kernreaktordruckbehälters während des Reaktorbetriebs standhält. Die Dichtung besteht aus zwei Dichtungselementen, die dem Verlauf von Dichtungsflächen auf der Auflagefläche zwischen Deckel und Unterteil folgen. Wegen der im wesentlichen zylindrischen Form des Unterteils sind die Dichtungselemente näherungsweise ringförmig. Eines der Dichtungselemente weist einen geringeren Durchmesser als das andere Dichtungselement auf und ist in der Regel konzentrisch zu dem anderen Dichtungselement angeordnet. Von den Dichtungselementen und von den Dichtungsflächen des Deckels und des Unterteils ist ein Zwischenraum in Form eines Ringraumes eingeschlossen, falls der Deckel über die Dichtungselemente auf dem Unterteil aufliegt.

In der Dichtungsfläche des Unterteils befindet sich eine Öffnung, die über eine durch die Wand des Unterteils führende Leckageüberwachungsleitung mit einer Detektoreinheit zur Leckageüberwachung in Verbindung steht. Eine in seltenen Fällen auftretende Undichtigkeit an dem innenliegenden Dichtungselement mit kleinerem Durchmesser ist bei einer solchen Anordnung mittels der Detektoreinheit erkennbar.

Eine derartige Leckageüberwachungseinrichtung ist z.B. aus "Patent Abstracts of Japan", P-1215, June 14, 1991, Vol. 15, No. 234 unter JP 3-71095 (A), bekannt.

Bei Wartungs- und/oder Servicearbeiten oder bei einer Revision im Kernkraftwerk wird der Deckel von dem Unterteil abgenommen und oftmals die gesamte Reaktorgrube, in der sich der Kernreaktordruckbehälter befindet, mit Wasser aus dem Primärkreislauf geflutet. Dabei kommt es häufig zu einem ungewünschten Eindringen von Primärwasser in die Leckageüberwachungsleitung. Es ist bekannt, dem Eindringen von Primärwasser dadurch entgegenzuwirken, dass während der durchzuführenden Arbeiten ein Stopfen oder ein Verschluss in die Öffnung in der Dichtfläche auf dem Unterteil des Reaktordruckbehälters gesteckt wird. Dies gelingt aber nur ungenügend, da es immer Zeiten gibt, wenngleich auch sehr kurze, während derer die Öffnung unverschlossen ist.

Der Erfindung liegt die Aufgabe zugrunde, einen Reaktordruckbehälter mit einer Leckageüberwachungseinrichtung anzugeben, bei dem die beschriebenen Nachteile vermieden sind und bei dem insbesondere eine Benetzung der Detektoreinheit mit Primärwasser und einen Eintrag von Primärwasser in die Leckageüberwachungsleitung während der durchzuführenden Arbeiten weitgehender, zuverlässiger und ergonomischer verhindert als dies bei den bekannten Leckageüberwachungseinrichtungen verbunden mit der bislang üblichen Vorgehensweise der Fall ist.

Zur Lösung der Aufgabe ist in der Leckageüberwachungsleitung des Druckbehälters ein Überdruckventil angeordnet.

Der Vorteil besteht darin, daß eine Benetzung der Detektoreinheit mit Primärwasser vollständig und zuverlässig vermieden ist. Von besonderem Vorteil ist gleichfalls, dass das bislang übliche Einstecken von Stopfen in die Öffnung unnötig ist. Das Einstecken und Entfernen der Stopfen wurde bislang z.B. mittels aufwendigen und ferngesteuerten Bedienwerkzeugen durchgeführt, wobei es auch zu Beschädigungen der Dichtungsflächen kommen konnte. Diese umständlichen Arbeitsvorgänge sind bei einer Leckageüberwachungseinrichtung nach der Erfindung nicht mehr nötig.

Bei der bislang üblichen Vorgehensweise hätte auch das Wiederentfernen der Stopfen vor dem Wiederaufsetzen des Deckels auf das Unterteil des Kernreaktordruckbehälters vergessen werden können, wodurch eine Inbetriebnahme des Kernreaktors zunächst nicht möglich gewesen wäre. Eine Verlängerung der Unterbrechung des Betriebs des Kernreaktors wäre die Folge gewesen, möglicherweise verbunden mit Beschädigungen am Deckel oder mit Störungen. Im ungünstigsten Fall hätte das Vergessen des Entfernens des Stopfens - obgleich mit sehr geringer Wahrscheinlichkeit - bei dem nachfolgenden Reaktorbetrieb zu einem Ausfall der betreffenden Leckageüberwachungseinrichtung führen können. Dieses Risiko wird mit einer Leckageüberwachungseinrichtung nach der Erfindung in vorteilhafter Weise vermieden.

Der erfindungsgemäß ausgestaltete Reaktordruckbehälter führt auch zu einer Minimierung der radioaktiven Dosis für das Betriebspersonal, da das Überdruckventil im Gegensatz zu den bislang üblichen Stopfen nur einmalig, und nicht bei allen Wartungs- oder Servicearbeiten erneut, angebracht werden muß. Durch den Wegfall von Arbeitsschritten wird auch eine Revisionszeitverkürzung und damit eine u.U. immense Kostenersparnis für das betreffende Kernkraftwerk erreicht.

Der zur Beschreibung verwendete Begriff "Überdruckventil" steht allgemein für eine Verschlusseinrichtung, die sich bei Erreichen eines einseitig anliegenden Auslösedruckes, bzw. insbesondere bei Erreichen einer Auslösedruckdifferenz zwischen beiderseitigen Anschlüssen der Verschlusseinrichtung, öffnet. Das Öffnen kann sowohl selbsttätig als auch fremdgesteuert erfolgen. Das Überdruckventil kann z.B. ein Druckbegrenzungsventil sein.

Bevorzugt ist das Überdruckventil im wesentlichen an der Öffnung angeordnet. Dadurch wird in vorteilhafter Weise nicht nur eine Benetzung der Detektoreinheit mit Primärwasser verhindert, sondern vielmehr der Eintrag von Primärwasser bereits ab der Öffnung vermieden. Die Leckageüberwachungsleitung kann damit über ihre gesamte Länge von Primärwasser freigehalten werden.

Nach einer besonders bevorzugten Ausgestaltung ist der Auslösedruck des Überdruckventils, bei dessen Überschreiten im Zwischenraum das Überdruckventil öffnet, geringfügig höher als ein vorgegebener Maximaldruck, der bei Wartungs- und/oder Servicearbeiten an der Öffnung zu erwarten ist.

Der Ausgestaltung liegt nämlich unter anderem die Erkenntnis zugrunde, daß die Funktion einer Leckageüberwachungseinrichtung für einen Kernreaktordruckbehälter auch dann noch sichergestellt ist, falls nur solche Lecks erkannt werden, die zu einem Druck im Zwischenraum führen, der oberhalb eines bestimmten Grenzdruckes liegt. Eine weitere Erkenntnis besteht darin, dass der Druck, der bei Wartungs- und/oder Servicearbeiten an der Öffnung zu erwarten ist, unterhalb dieses Grenzdrucks liegt. Dieser Grenzdruck wird als Auslösedruck des Überdruckventils gewählt. Das vorgesehene Überdruckventil kann deshalb zur Vermeidung von Primärwassereintrag- in die Verbindung zwischen der Öffnung und der Detektoreinheit eingebaut werden, ohne die Funktion der Detektoreinheit während des laufenden Reaktorbetriebes zu beeinflussen. Der Einbau des Überdruckventils kann auch nachträglich in eine bereits bestehende Leckageüberwachungseinrichtung erfolgen.

Beispielsweise beträgt der Auslösedruck des Überdruckventils ca. 2 bar.

Das Überdruckventil kann z.B. in das Unterteil des Kernreaktordruckbehälters eingeschweißt sein. Eine solche Anordnung bietet den Vorteil der besonderen Stabilität und Wartungsfreundlichkeit.

Insbesondere kann das Überdruckventil bündig mit der Dichtungsfläche des Unterteils abschließen, so daß das Überdruckventil vollständig im Unterteil versenkt ist, und die i.a. ebene Dichtungsfläche nicht durch überstehende Teile unterbrochen ist. Dadurch ist in vorteilhafter Weise eine uneingeschränkte Reinigung der Dichtungsflächen möglich. Die Dichtungsfläche kann dann während der durchzuführenden Wartungsund/oder Servicearbeiten auf einfache Weise mit einem Dichtungsflächenschutz versehen werden.

Vorzugsweise wird das Ausgangssignal der Detektoreinheit bei eingebautem Überdruckventil aufgezeichnet.

Ein Ausführungsbeispiel eines Reaktordruckbehälters mit einer Leckageüberwachungseinrichtung wird anhand der beiden Figuren näher erläutert. Dabei zeigt:
- FIG 1: einen Ausschnitt eines Querschnitts durch einen Reaktordruckbehälter und
- FIG 2: eine vergrößerte Darstellung des in Figur 1 gekennzeichneten Ausschnitts II.

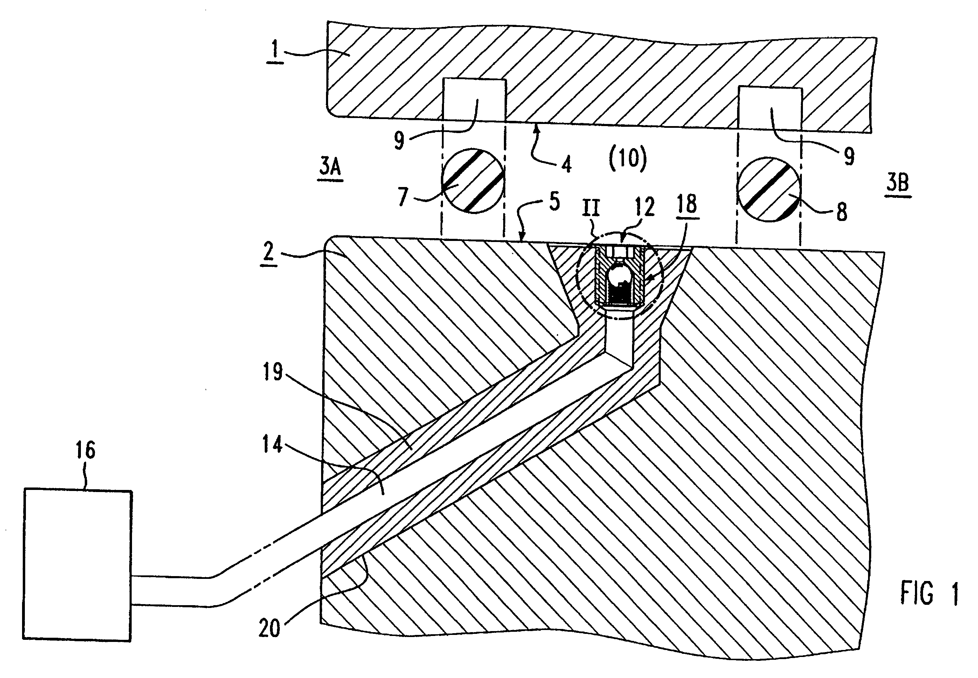

Figur 1 zeigt einen Querschnitt durch einen Teil der Wand eines Deckels 1 und eines Unterteils 2 eines Kernreaktordruckbehälters, dessen Innenraum 3B sich in Figur 1 rechts und dessen Umgebung (Außenraum) 3A sich in Figur 1 links befindet.

Zwischen einer Dichtungsfläche 4 des Deckels 1 und einer Dichtungsfläche 5 des Unterteils 2 sind zwei Dichtungselemente 7, 8 angeordnet. Der Deckel 1 ist in einem Zustand gezeichnet, in dem er - beispielsweise bei einer Wartungsund/oder Servicearbeit oder bei einer Revision - von dem Unterteil 2 abgehoben ist. Im Deckel 1 sind zwei Nuten 9 zur Aufnahme der Dichtungselemente 7, 8 eingebracht, mittels derer die Dichtungselemente 7, 8 während des Reaktorbetriebes, d.h. bei aufgesetztem Deckel 1, in Lage gehalten sind. Die Dichtungselemente 7, 8 sind im ausgebauten Zustand gezeichnet. Sie liegen während des Reaktorbetriebes auf der Dichtungsfläche 5 des Unterteils 2 auf.

Bei auf dem Unterteil 2 aufliegendem Deckel 1 ist zwischen den Dichtungsflächen 4, 5 und den Dichtungselementen 7, 8 ein ringförmiger Zwischenraum 10, d.h. ein Ringraum 10, gebildet. Der Ringraum 10 ist in Figur 1 lediglich angedeutet, da in Figur 1 der Deckel 1 in abgehobenem Zustand dargestellt ist. Der Ringraum 10 ist während des Reaktorbetriebes tatsächlich sehr viel kleiner.

Die Dichtungsfläche 5 des Unterteils befindet sich am zylindrischen Teil des Kernreaktordruckbehälters, weshalb die beiden Dichtungselemente 7, 8 im wesentlichen ringförmig sind. Das außenliegende Dichtungselement 7 und das innenliegende Dichtungselement 8 sind im wesentlichen konzentrisch angeordnet.

Eine Öffnung 12 in der Dichtungsfläche 5 des Unterteils 2 ist über eine Leckageüberwachungsleitung 14 mit einer Detektoreinheit 16 zur Leckageüberwachung-verbunden. Unmittelbar an der Öffnung 12 ist in die Leckageüberwachungsleitung 14 ein Überdruckventil 18 eingeschweißt.

Die Leckageüberwachungsleitung 14 führt durch eine teilweise mit einem Füllmaterial 19 ausgekleidete Bohrung 20 im Unterteil 2 in die Umgebung 3A des Reaktordruckbehälters, wo die Detektoreinheit 16 angeordnet ist.

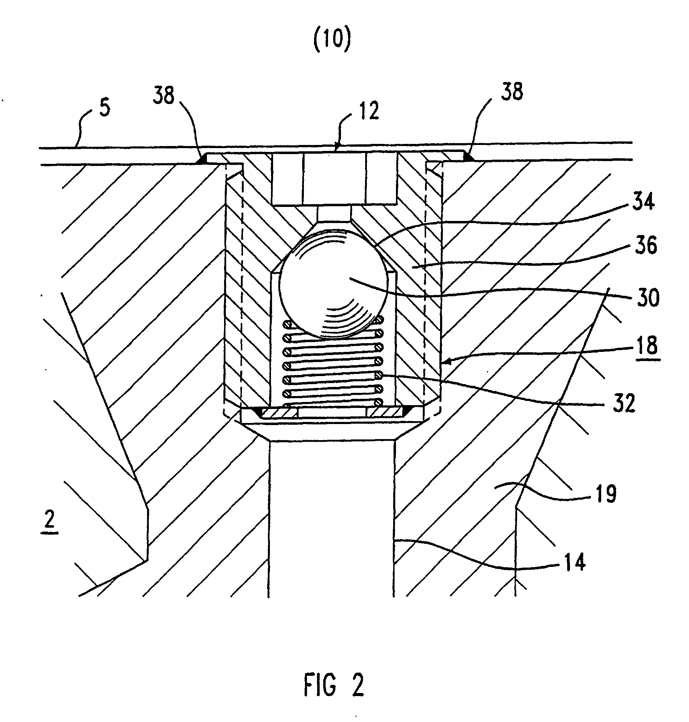

Figur 2 zeigt den in Figur 1 markierten Bereich in vergrößerter Darstellung, insbesondere das Überdruckventil 18. Das Überdruckventil 18 umfaßt einen kugelförmigen Absperrkörper 30, der von einer Feder 32 gegen einen Ventilsitz 34 gedrückt ist. Ein Ventilgehäuse 36 ist über eine Schweißverbindung 38 mit dem Unterteil 2 des Kernreaktordruckbehälters verbunden. Das Überdruckventil 18 ist vollständig in der Wand des Unterteils 2 versenkt, so daß die Dichtungsfläche 5 des Unterteils 2 nicht von hervorstehenden Teilen des Überdruckventils 18 unterbrochen ist.

Die Feder 32 übt eine Federkraft auf den Absperrkörper 30 aus, wobei die Federkraft so groß gewählt ist, daß der Absperrkörper 30 bei einem an der Öffnung 12 anstehenden Druck von mehr als einem zuvor festgelegten Auslösedruck von z.B. 2 bar von dem Ventilsitz 34 weggedrückt wird und das Überdruckventil 18 öffnet. Bei den durchzuführenden Wartungsund/oder Servicearbeiten steht über der Öffnung 12 eine Wassersäule an, die an der Öffnung 12 einen Druck von weniger als 2 bar erzeugt, so daß ein Eintreten von Wasser in die Leckageüberwachungsleitung 14 verhindert ist. Steigt dagegen bei laufendem Reaktorbetrieb, d.h. bei auf das Unterteil 2 aufgesetztem Deckel 1, der Druck in dem dann gebildeten Ringraum 10 über 2 bar, so sind Undichtigkeiten an dem innenliegenden Dichtungselement 8 mittels der Detektoreinheit 16 feststellbar.

## Patentansprüche

1. Reaktordruckbehälter mit einem Deckel (1), einem Unterteil (2) und einer dazwischen angeordneten Dichtung, wobei
- die Dichtung zwei Dichtungselemente (7,8) aufweist,
- von den Dichtungselementen (7,8) und von Dichtungsflächen (4,5) des Deckels (1) und des Unterteils (2) bei aufliegendem Deckel (1) ein Zwischenraum (10) eingeschlossen ist, und
- eine Öffnung (12) in einer der Dichtungsflächen (5) mit einer Detektoreinheit (16) zur Leckageüberwachung über eine Leckageüberwachungsleitung (14) in Verbindung steht,
**dadurch gekennzeichnet,**
**dass** in der Leckageüberwachungsleitung (14) ein Überdruckventil (18) vorhanden ist.

2. Reaktordruckbehälter nach Anspruch 1,
**dadurch gekennzeichnet, dass**
das Überdruckventil (18) im wesentlichen an der Öffnung (12) angeordnet ist.

3. Reaktordruckbehälter nach Anspruch 1 oder 2,
**dadurch gekennzeichnet, dass**
der Auslösedruck des Überdruckventils (18), bei dessen Überschreiten im Zwischenraum (10) das Überdruckventil (18) öffnet, geringfügig höher ist als ein vorgegebener Maximaldruck,' der bei Wartungs- und/ oder Servicearbeiten an der Öffnung (12) zu erwarten ist.

4. Reaktordruckbehälter nach Anspruch 3,
**dadurch gekennzeichnet, dass**
der Auslösedruck ca. 2 bar ist.

5. Reaktordruckbehälter nach einem'der Ansprüche 1 bis 4,
**dadurch gekennzeichnet, dass** das Überdruckventil (18) in das Unterteil (2) des Kernreaktordruckbehälters eingeschweißt ist.

## Claims

1. Reactor pressure vessel having a closure head (1), a lower part (2) and a seal arranged therebetween, in which
- the seal has two sealing elements (7, 8),
- an interspace (10) is enclosed by the sealing elements (7, 8) and by sealing surfaces (4, 5) of the closure head (1) and of the lower part (2) with the closure head (1) resting thereupon, and
- an opening (12) in one of the sealing surfaces (5) is connected to a detector unit (16) for leakage monitoring via a leakage monitoring line (14),
**characterized in that** a pressure relief valve (18) is present in the leakage monitoring line (14).

2. Reactor pressure vessel according to Claim 1, **characterized in that** the pressure relief valve (18) is arranged substantially at the opening (12).

3. Reactor pressure vessel according to Claim 1 or 2, **characterized in that** the tripping pressure of the pressure relief valve (18), upon the overshooting of which in the interspace (10) the pressure relief valve (18) opens, is slightly higher than a prescribed maximum pressure which is to be expected at the opening (12) during maintenance and/or service work.

4. Reactor pressure vessel according to Claim 3, **characterized in that** the tripping pressure is approximately 2 bars.

5. Reactor pressure vessel according to one of Claims 1 to 4, **characterized in that** the pressure relief valve (18) is welded into the lower part (2) of the nuclear reactor pressure vessel.

## Revendications

1. Cuve sous pression d'un réacteur comprenant un couvercle (1), une partie (2) inférieure et un dispositif d'étanchéité interposé entre eux, dans laquelle
- le dispositif d'étanchéité comprend deux éléments (7, 8) d'étanchéité,
- un espace (10) intermédiaire est enfermé entre les éléments (7, 8) d'étanchéité et des surfaces (4, 5) d'étanchéité du couvercle (1) et de la partie (2) inférieure lorsque le couvercle (1) est appliqué et
- une ouverture (12) ménagée dans l'une des surfaces (5) d'étanchéité communique avec une unité (16) formant détecteur de surveillance des fuites par un conduit (14) de surveillance des fuites,
**caractérisée**
**en ce qu'**il est prévu dans le conduit (14) de surveillance des fuites une vanne (18) de surpression.

2. Cuve sous pression de réacteur suivant la revendication 1,
**caractérisée en ce que** la vanne (18) de surpression est disposée sensiblement sur l'ouverture (12).

3. Cuve sous pression de réacteur suivant la revendication 1 ou 2,
**caractérisée en ce que** la pression de déclenchement de la vanne (18) de surpression qui, lorsqu'elle est dépassée dans l'espace (10) intermédiaire, fait que la vanne (18) de surpression s'ouvre, est légèrement plus grande qu'une pression maximum prescrite à laquelle on peut s'attendre lors de travaux d'entretien et/ou de service sur l'ouverture (12).

4. Cuve sous pression de réacteur suivant la revendication 3,
**caractérisée en ce que** la pression de déclenchement est de 2 bars environ.

5. Cuve sous pression de réacteur suivant l'une des revendications 1 à 4,
**caractérisée en ce que** la vanne (18) de surpression est soudée dans la partie (2) inférieure de la cuve sous pression du réacteur.
